# EUROPEAN PATENT SPECIFICATION

(11) **EP 2 707 188 B1**
(45) Date of publication and mention of the grant of the patent: **11.03.2015**
(21) Application number: 12720147.3
(22) Date of filing: 07.05.2012
(51) Int. Cl.: B29B 7/38, D01D 1/02, D01D 1/09, G01F 11/24

(54) **METHOD FOR DOSING A POWDER INTO A KNEADER**
VERFAHREN ZUR DOSIERUNG EINES PULVERS IN EINER KNETMASCHINE
PROCÉDÉ POUR DOSER UNE POUDRE DANS UN MALAXEUR

(30) Priority: 10.05.2011 EP 11165508
(43) Date of publication of application: 19.03.2014
(73) Proprietor: Teijin Aramid B.V., 6824 BM Arnhem (NL)
(72) Inventor: WAARBEEK TER, Ronald Folkert, NL-6904 ND Zevenaar (NL); WINTERS, Robin, NL-6681 EM Bemmel (NL)
(74) Representative: Heimann, Anette
(86) International application number: PCT/EP2012/058342
(87) International publication number: WO 2012/152742

(56) References cited:
- EP-A1- 0 938 960
- WO-A1-2008/095632
- US-A- 5 413 631

## Description

The invention pertains to a method for dosing powder into a kneader via a feeder-mechanism.

The invention pertains also to a kneader comprising a feeder-mechanism for dosing powder into a kneader.

Feeding-mechanisms for kneaders are known.

WO 2008/138597 discloses in one embodiment a pre-mixing device, which mixes a polymer powder and sulphuric acid. Afterwards, the mixture is fed into the kneader via one feeding hole in the kneader. A special mechanism for maintaining a low pressure inside the kneader is not intended.

WO 2008/095632 discloses a system in which polymer is introduced in the kneader through a rotary valve. Due to the use of the rotary valve the dissolved polymer can be degassed under slightly reduced pressure in the kneader. WO 2008/095632 does not disclose a feeding-mechanism in which a high barrier against the surrounding atmosphere is created, because a single rotary valve cannot achieve such a barrier.

The problem of the feeding-mechanism of the prior art is, that the feeding proceeding applied leads to a continuous air leakage and thus the kneader is only partially be degassed. In almost all cases the pressure inside the kneader either increases temporarily and the desired low pressure inside the kneader has to be restored or the amount of air getting into the kneader is too high to maintain a very low vacuum level over long periods of time. In order to obtain the desired vacuum level great amounts of gas have to be removed, which requires large and expensive vacuum pumps. However, when such powerful pumps are applied, a lot of dust and powder is sucked out of the kneader that may clog the vacuum lines and eventually the pumps are being damaged.

Therefore, the aim of the invention is a method for feeding powder into a kneader wherein these drawbacks are at least reduced.

The aim is achieved by a method with the features of claim 1.

By the method according to claim 1 the powder is fed via a feeder-mechanism into a feeding hole in the kneader, whereby powder falls from an additional feeding device of the feeder-mechanism into one of at least four segments of a turnable rotary valve of the feeder-mechanism or reverse. Due to the two-step feeding-mechanism, a vacuum lock is created. The amount of air, which enters the kneader via the feeding mechanism, is reduced. Therefore, the desired low pressure inside the kneader (for example a vacuum or a partial vacuum) remains and only small variation of pressure inside the kneader has to be compensated, requiring a smaller vacuum pump.

The method is suitable for all kind of kneaders, for example double shaft kneader, single shaft kneader and kneaders with three or more kneading shafts.

Preferably, the powder, which is fed to the kneader via the feeding-mechanism, is a polymer and/or a copolymer powder, especially a polymer and/or a copolymer consisting predominately of an aromatic polyamide. Such (co)-polymers are known and can be prepared from various monomers including but not limited to aromatic para-diamines or derivatives thereof with aromatic para-diacids or derivatives thereof.

Examples for suitable aromatic diamines are para-phenylene diamine (PPD), 2-chloro-p-phenylenediamine (CI-PPD), Me-PPD, MeO-PPD, and the like. Most preferably PPD and/or Cl-PPD are used.

Also preferred as an aromatic amine is (5-(6)-amino-2-(p-aminophenyl)benzimidazole) (DAPBI).

Examples for suitable derivatives of aromatic para-diacids are para-diacid terephthaloyl dichloride (TDC) or Cl-TDC (2-chloroterephthaloyl dichloride) as well as 2,6-napthaloyl chloride.

Preferred polymers and copolymers are poly(para-phenylene terephthalamide) (PPTA) and a DAPBI-PPD copolymer that is obtained by co-polymerizing the aromatic diamine monomer 5-(6)-amino-2-(paminophenyl)benzimidazole and the aromatic para-diamine monomer p-phenylene diamine (PPD), and the aromatic para-diacid derivative terephthaloyl dichloride (TDC).

Preferably, the additional feeding device is a turnable further rotary valve, comprising at least four segments. Preferably, the powder falls from a segment of the further rotary valve into a segment of the rotary valve and after which the valve turns feeding the powder into the kneader. The rotary valve and/or the further rotary valve have preferably 4 to 25 segments, more preferably 8 to 20 and most preferred 10 to 15 segments. Due to the number of segments of the rotary valve and the further rotary valve the powder can be dosed in a very precise and continuous way into the kneader. In addition, the segments achieve a kind of lock between the low pressure inside the kneader and the outside atmosphere of the kneader. Due to the use of the two-step feeding-mechanism it is not necessary that the rotary valve as well as the further rotary valve are manufactured with a high accuracy. This means, gaps between the segments of the rotary valve and the housing of the rotary valve (rotary valve and/or further rotary valve) do not influence the pressure inside the kneader that much. It is therefore not necessary to manufacture special kinds of high accurate rotary valves for this feeding mechanism, which safes money and time in production.

Preferably, the further rotary valve is arranged on top of the rotary valve, which is arranged on top of the feeding hole of the kneader. Due to this arrangement powder falls as a result of gravity into the kneader and no further mechanism is necessary. By letting the powder fall into the kneader under its own weight, the powder is not compacted, which has the benefit of easier dissolution and/or mixing of the polymer inside the kneader.

In a preferred embodiment the speed of rotation of the rotary valve is equal or slightly higher than the speed of rotation of the further rotary valve. By applying this method, it is prevented that a segment of the rotary valve (which is arranged under the further rotary valve) is overfilled with powder. This prevents that the rotation of the rotary valves is hindered or stopped by overlaying powder material outside the segments of the rotary valves.

Preferably, the rotation of the rotary valve and of the further rotary valve is continuous. A continuous rotation has the advantage of a continuous feeding process of powder into the kneader. A continuous kneading process is therefore preferred.

In a second embodiment of this invention the additional filling device is a flap, whereby the powder falls onto the flap and from the flap into a segment of the rotary valve and from the segment of the rotary valve into the kneader. Preferably, the volume of the powder that amounts on the flap fits to the volume of the segments of the rotary valve. So, no powder overflow occurs by transferring the powder of the flap into the segment of the rotary valve. A flap as an additional device for the feeding-mechanism is a cheap alternative to a further rotary valve.

Preferably, a flap is a device, which closes and opens a material transport way periodically. Examples for a flap are a ball valve, a sliding gate valve, a butterfly valve or a plug valve.

Preferably, in the kneader a spin dope is produced by mixing aramid polymer powder and sulphuric acid and kneading this mixture inside the kneader to a spinning dope.

Preferably, poly(para-phenylene terephthalamide) powder is filled into the kneader via the feeding-mechanism and sulphuric acid is filled into the kneader via a separate inlet.

Another object of this invention is a kneader comprising a feeder-mechanism, whereby the feeder-mechanism comprises at least a rotary valve arranged above a filling hole of the kneader and a additional filling device arranged also above the filling hole of the kneader, whereby the rotary valve has at least four segments.

As already mentioned, the kneader can be a single shaft kneader, a double shaft kneader or a kneader with more than three shafts. The kneader can be used to mix polymer powder and sulphuric acid to a spin dope for making high strength para-aramid fibers, pulp or tapes.

Suitable commercial kneaders are available from List AG or Buss AG. Suitable kneaders made by LIST are for example DTB (single shaft kneader), CKR and CRP (both double shaft kneaders). Buss has similar kneaders under the name, MX, KX, MKS, LR, K_FE, PCS/TCS, and quantec series.

Buss-SMS-Canzler, sells single and double shaft kneaders under the name Reacotherm, Reacom, Reasol and Reavisc. RPA Process Technologies SAS and Readco Kurimoto LLC are also suppliers for kneaders. The apparatus Readco screw extruders for example is available from the above named companies.

Preferably, the additional filling device is a further rotary valve with at least four segments or a flap.

In a preferred embodiment the flap is arranged above (this means on top of) the rotary valve or the further rotary valve is arranged above the rotary valve. Due to the arrangement of a flap over the rotary valve (whereby the rotary valve is directly arranged on top of the filling hole of the kneader), the dosing of powder into the kneader is continuous. By using a further rotary valve instead of a flap, a lower and more constant vacuum level can be obtained (depending on the numbers of segments) compared when using a flap. On the other hand a flap is not so expensive as a further rotary valve and has a longer lifetime in comparison with a rotary valve.

Preferably, the feeder-mechanism comprises a scraper, which scrapes off overlaying material from the feeder-mechanism. The scraper is preferably arranged on both rotary valves, alternatively on a single rotary valve. Due to the scraper, the powder outside of the segments of the rotary valve or the further rotary valve cannot influence the feeding-mechanism and ensures that the rotary valves keep rotating. Therefore, the feeding-mechanism has a longer lifetime with less maintenance.

Preferably, the rotary valve rotation is continuous and/or the flap has a discontinuous mechanism. Also preferred, the rotation of the further rotary valve is continuous.

In a preferred embodiment the rotary valve and/or the additional filling device is made of polyvinylchloride, metal and/or rubber. By using metal for the rotary valve and/or the further rotary valve the rotary valves are very robust against abrasion. The use of rubber has the advantageous that material seals the metal connections between the kneader and the rotary valve, thus preventing air to get into the kneader.

Preferably, the speed of rotation of the rotary valve is equal or slightly higher than the speed of rotation of the further rotary valve. As already mentioned by a lower or equal rotation speed the rotary valve cannot be overfilled with powder. No powder material is wasted and no powder material outside the segments can influence the feeding-mechanism.

Preferably, polymer powder is fed via the feeder-mechanism into the kneader. More preferably para-aramid powder material is fed via the feeding-mechanism into a double shaft kneader.

In a preferred embodiment in the mixing area of the kneader is an absolute pressure of less than 400 mbar, preferably less than 250 mbar, even more preferred less than 150 mbar; even 30 to about 50 mbar (absolute) can be reached. Preferably, the pressure is more or less constant during the feeding. The term more or less constant means that the pressure is in the range of ± 10% of e.g. 150 mbar.

Another object of this invention is the use of a kneader comprising a feeder-mechanism as mentioned above, for producing a para-aramid spin dope. The para-aramid spin dope is preferably used to produce para-aramid fibers, pulp or tapes. Due to the use of the feeding-mechanism inside the kneader, the low pressure is still maintained during the entire mixing procedure. Therefore, no small air bubbles are present in the obtained spin dope. By spinning a fiber with a spinneret with very fine holes (approximately lower than 65 micron) the air (of the spin dope) is accumulated in the spinneret and at some point in time the spinning process is stopped, due to accumulation of air in the spinneret.

The invention is further elucidated by figures, which are given below.
- Figure 1: schematically shows a two-step feeding mechanism.
- Figure 2: schematically shows a second embodiment of a two-step feeding mechanism.
- Figure 3: schematically shows a third embodiment of a two-step feeding mechanism.

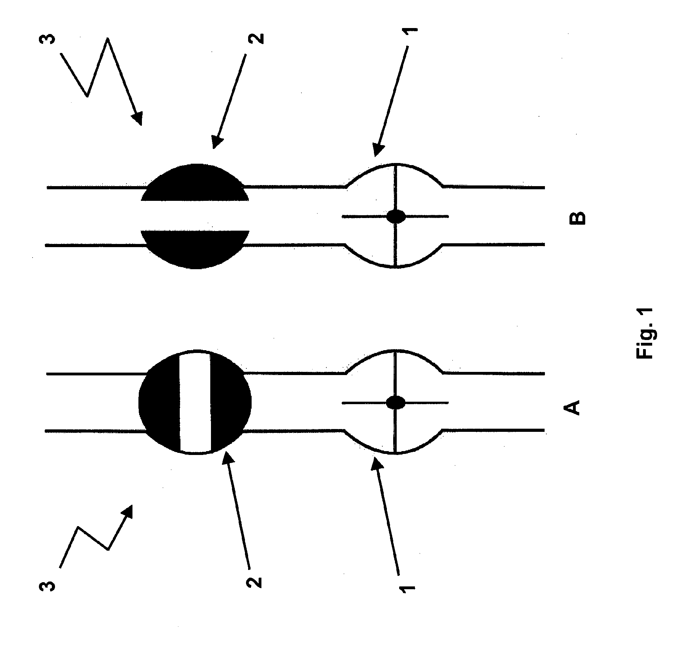

In figure 1, a first embodiment of a feeding mechanism 3 in a lock position A and an open position B is shown. The feeding mechanism 3 in figure 1 comprises a ball valve 2 and a rotary valve 1. In the lock position A the ball valve 2 is in such a position, that no material can pass the ball valve 2. Therefore, no material can arrive at the rotary valve 1 and enter the kneader. Air cannot enter the kneader in the lock position A, and therefore, a low pressure or a vacuum persists. In the open position B the ball valve 2 is open and material can pass the ball valve 2 and enter the rotary valve 1. Also in the open position B a kind of barrier is created. Due to the segments of the rotary valve 1 air can hardly pass the segments of the rotary valve 1 and enter the kneader. The pressure inside the kneader is therefore approximately constant or the pressure variations are smaller in comparison with prior art feeding mechanisms. In this embodiment the feeding mechanism 3 works in a discontinuous way. In the embodiment of figure 1 the ball valve 2 is arranged in line and on top of the rotary valve 1, whereby the rotary valve 1 is arranged in line and on top of a feeding hole of a kneader. It is also possible that the ball valve 2 is arranged in line and on top of the feeding hole of the kneader and the rotary valve 1 is arranged in line and on top of the ball valve 2.

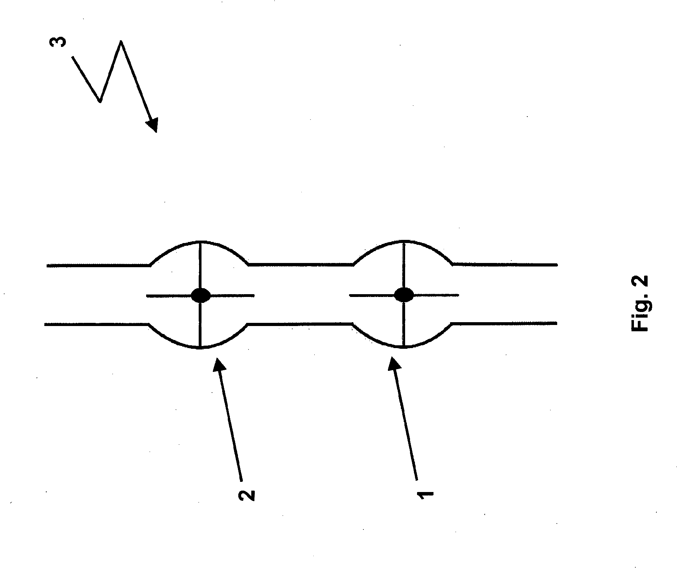

In figure 2 the feeding mechanism 3 comprises a first rotary valve 1 and an additional feeding device in form of a further rotary valve 2. Due to the use of two rotary valves 1, 2 a kind of permanent barrier is created between the outside atmosphere and the kneader atmosphere. The rotational speed of the rotary valve 1 is preferably equal or slightly higher than the rotational speed of the further rotary valve 2. Therefore, the rotary valve 1 is prevented from overfilling and the feeding mechanism 3 runs consistently and reliable. Both, the rotary valve 1 and the further rotary valve 2 have at least four segments. If the rotary valve 1 and/or the further rotary valve 2 have more segments the barrier is more effective. The rotary valve 1 and the further rotary valve 2 can have the same number of segments or different numbers of segments. In a preferred embodiment the rotary valve 1 has more segments as the further rotary valve 2 and a higher rotational speed. Due to the higher numbers of segments of the rotary valve 1 material can enter the kneader more stable and consistently in comparison with a rotary valve with a lower number of segments. In the embodiment of figure 2 the feeding mechanism works in a continuous way.

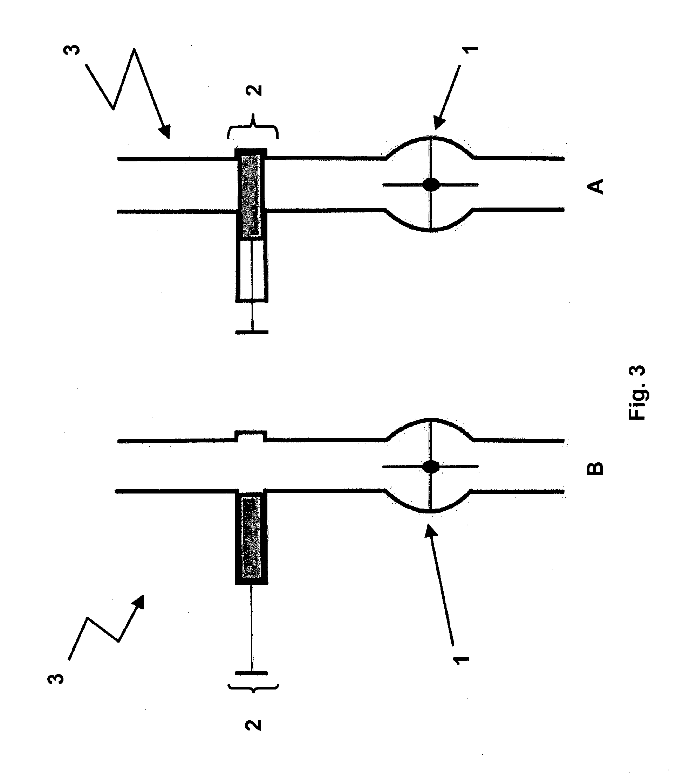

In figure 3 the feeding mechanism comprises a rotary valve 1 and an additional feeding device in form of a sliding gate valve 2. In position B the sliding gate valve 2 is open and material can enter the rotary valve 1 and the kneader. In position A the sliding gate valve 2 is locked and therefore, no material can enter the rotary valve 1 and the kneader (lock position A). In the lock position A, a barrier is created by the sliding gate valve 2 and also the rotary valve 1. In the open position B such a barrier is created by the rotary valve 1 only. The feeding mechanism 3 of figure 3 works in a discontinuous manner (either closed or open). In the embodiment of figure 3 the sliding gate valve 2 is arranged in line and on top of the rotary valve 1, whereby the rotary valve 1 is arranged in line and on top of a feeding hole of a kneader. It is also possible that the rotary valve 1 is arranged in line and on top of the sliding gate valve 2, whereby the sliding gate valve 2 is arranged in line and on top of a feeding hole of the kneader.

### Reference numbers

- 1: rotary valve
- 2: additional feeding device
- 3: feeding mechanism
- A: lock position
- B: open position

## Claims

1. Method for dosing a powder into a kneader, whereby the powder is filled via a feeder-mechanism (3) into a feeding hole of the kneader, whereby powder falls from an additional feeding device (2) of the feeder-mechanism into one of at least 4 segments of a turnable rotary valve (1) of the feeder-mechanism (3) or reverse.

2. Method according to claim 1, whereby the additional feeding device (2) is a turnable further rotary valve, comprising at least 4 segments and the powder falls from a segment of the further rotary valve into a segment of the rotary valve (1) and from the segment of the rotary valve (1) into the kneader.

3. Method according to claim 2, whereby the speed of rotation of the rotary valve (1) is equal or higher than the speed of rotation of the further rotary valve.

4. Method according to claim 2 or claim 3, whereby the rotation of the rotary valve (1) and of the further rotary valve is continuous.

5. Method according to claim 1, whereby the additional of feeding device is a flap, whereby the powder falls onto the flap and from the flap into a segment of the rotary valve (1) and from the segment of the rotary valve (1) into the kneader.

6. Method according to any of the foregoing claims, whereby in the kneader a spin dope by mixing aramid polymer powder and sulphuric acid and kneading this mixture inside the kneader.

7. Method according to claim 6, whereby para-phenylene terephthalamide powder is fed into the kneader via the feeding-mechanism (3) and sulphuric acid is fed into the kneader via a separate inlet.

8. Kneader comprising a feeder-mechanism (3), whereby the feeder-mechanism (3) comprises at least a rotary valve (1) turnable arranged above a feeding hole of the kneader and an additional feeding device (2) arranged also above the feeding hole of the kneader, whereby the rotary valve (1) has at least 4 segments.

9. Kneader according to claim 8, whereby the additional feeding device (2) is a further rotary valve with at least 4 segments or a flap.

10. Kneader according to claim 9, whereby the flap is arranged above the rotary valve (1) or the further rotary valve is arranged above the rotary valve (1).

11. Kneader according to any of the foregoing claims 8 or 10, whereby the feeder-mechanism (3) comprises a scraper, which scraps overlaying material from the feeder-mechanism (3).

12. Kneader according to any of the foregoing claims 8 to 11, whereby the rotary valve (1) and/or the additional filling device (2) is made of polyvinylchloride, metal and/or rubber.

13. Kneader according to any of the foregoing claims 8 to 12, whereby the rotation of the rotary valve (1) is continuous.

14. Kneader according to claim 9, whereby the rotation of the further rotary valve is continuous or the flap has a discontinuous movement.

15. Kneader according to claim 9, whereby the speed of rotation of the rotary valve (1) is equal or higher than the speed of rotation of the further rotary valve.

16. Kneader according to any of the foregoing claims 8 to 15, whereby in the mixing area of the kneader a low pressure of less than 150 mbar (absolute) is maintained.

17. Kneader according to any of the foregoing claims 8 to 16, whereby polymer powder is fed via the feeder-mechanism (3) into the kneader.

18. Kneader according to any of the foregoing claims 8 to 17, whereby the kneader is a double shaft kneader or a single shaft kneader.

## Patentansprüche

1. Verfahren zum Dosieren eines Pulvers in einen Kneter, wobei das Pulver über einen Zuführmechanismus (3) in eine Zuführöffnung des Kneters eingefüllt wird, wobei Pulver aus einer zusätzlichen Zuführvorrichtung (2) des Zuführmechanismus in eins von mindestens 4 Segmenten eines drehbaren Drehventils (1) des Zuführmechanismus (3) fällt oder umgekehrt.

2. Verfahren nach Anspruch 1, wobei die zusätzliche Zuführvorrichtung (2) ein drehbares weiteres Drehventil ist, das mindestens 4 Segmente umfasst, und das Pulver aus einem Segment des weiteren Drehventils in ein Segment des Drehventils (1) und aus dem Segment des Drehventils (1) in den Kneter fällt.

3. Verfahren nach Anspruch 2, wobei die Drehzahl des Drehventils (1) größer gleich der Drehzahl des weiteren Drehventils ist.

4. Verfahren nach Anspruch 2 oder Anspruch 3, wobei die Drehung des Drehventils (1) und des weiteren Drehventils kontinuierlich erfolgt.

5. Verfahren nach Anspruch 1, wobei es sich bei der zusätzlichen Zuführvorrichtung um eine Klappe handelt, wobei das Pulver auf die Klappe und aus der Klappe in ein Segment des Drehventils (1) und aus dem Segment des Drehventils (1) in den Kneter fällt.

6. Verfahren nach einem der vorhergehenden Ansprüche, wobei in dem Kneter eine Spinnlösung durch Mischen von Aramidpolymerpulver und Schwefelsäure und Kneten dieser Mischung in dem Kneter hergestellt wird.

7. Verfahren nach Anspruch 6, wobei Paraphenylenterephthalamid-Pulver über den Zuführmechanismus (3) in den Kneter eingebracht wird und Schwefelsäure über einen separaten Einlass in den Kneter eingebracht wird.

8. Kneter, umfassend einen Zuführmechanismus (3), wobei der Zuführmechanismus (3) mindestens ein Drehventil (1) umfasst, das drehbar über einer Zuführöffnung des Kneters angeordnet ist, und eine zusätzliche Zuführvorrichtung (2), die ebenfalls über der Zuführöffnung des Kneters angeordnet ist, wobei das Drehventil (1) mindestens 4 Segmente aufweist.

9. Kneter nach Anspruch 8, wobei es sich bei der zusätzlichen Zuführvorrichtung (2) um ein weiteres Drehventil mit mindestens 4 Segmenten oder eine Klappe handelt.

10. Kneter nach Anspruch 9, wobei die Klappe über dem Drehventil (1) angeordnet ist oder das weitere Drehventil über dem Drehventil (1) angeordnet ist.

11. Kneter nach einem der vorhergehenden Ansprüche 8 oder 10, wobei der Zuführmechanismus (3) einen Schaber umfasst, der aufliegendes Material von dem Zuführmechanismus (3) abschabt.

12. Kneter nach einem der vorhergehenden Ansprüche 8 bis 11, wobei das Drehventil (1) und/oder die zusätzliche Füllvorrichtung (2) aus Polyvinylchlorid, Metall und/oder Gummi hergestellt ist bzw. sind.

13. Kneter nach einem der vorhergehenden Ansprüche 8 bis 12, wobei die Drehung des Drehventils (1) kontinuierlich erfolgt.

14. Kneter nach Anspruch 9, wobei die Drehung des weiteren Drehventils kontinuierlich erfolgt oder sich die Klappe diskontinuierlich bewegt.

15. Kneter nach Anspruch 9, wobei die Drehzahl des Drehventils (1) größer gleich der Drehzahl des weiteren Drehventils ist.

16. Kneter nach einem der vorhergehenden Ansprüche 8 bis 15, wobei im Mischbereich des Kneters ein niedriger Druck von unter 150 mbar (absolut) aufrechterhalten wird.

17. Kneter nach einem der vorhergehenden Ansprüche 8 bis 16, wobei Polymerpulver über den Zuführmechanismus (3) in den Kneter eingebracht wird.

18. Kneter nach einem der vorhergehenden Ansprüche 8 bis 17, wobei es sich bei dem Kneter um einen Doppelwellenkneter oder einen Einwellenkneter handelt.

## Revendications

1. Procédé pour doser une poudre dans un malaxeur, dans lequel la poudre est chargée, par l'intermédiaire d'un mécanisme d'alimentation (3), dans un trou d'alimentation du malaxeur, la poudre tombant d'un dispositif d'alimentation supplémentaire (2) du mécanisme d'alimentation dans un d'au moins 4 segments d'une vanne rotative (1) du mécanisme d'alimentation (3) ou l'inverse.

2. Procédé selon la revendication 1, dans lequel le dispositif d'alimentation supplémentaire (2) est une vanne rotative supplémentaire comprenant au moins 4 segments, et la poudre tombe d'un segment de la vanne rotative supplémentaire dans un segment de la vanne rotative (1), puis, du segment de la vanne rotative (1), dans le malaxeur.

3. Procédé selon la revendication 2, dans lequel la vitesse de rotation de la vanne rotative (1) est égale ou supérieure à la vitesse de rotation de la vanne rotative supplémentaire.

4. Procédé selon la revendication 2 ou la revendication 3, dans lequel la rotation de la vanne rotative (1) et de la vanne rotative supplémentaire est continue.

5. Procédé selon la revendication 1, dans lequel le dispositif d'alimentation supplémentaire est un volet, la poudre tombant sur le volet et, du volet, dans un segment de la vanne rotative (1), puis, du segment de la vanne rotative (1), dans le malaxeur.

6. Procédé selon l'une quelconque des revendications précédentes, dans lequel une solution de filage est produite dans le malaxeur en mélangeant une poudre de polymère d'aramide et de l'acide sulfurique et en malaxant ce mélange dans le malaxeur.

7. Procédé selon la revendication 6, dans lequel de la poudre de paraphénylène-téréphthalamide est introduite dans le malaxeur par l'intermédiaire du mécanisme d'alimentation (3), et de l'acide sulfurique est introduit dans le malaxeur par l'intermédiaire d'une entrée séparée.

8. Malaxeur comprenant un mécanisme d'alimentation (3), lequel mécanisme d'alimentation (3) comprend au moins une vanne rotative (1), disposée de manière à pouvoir tourner au-dessus d'un trou d'alimentation du malaxeur, et un dispositif d'alimentation supplémentaire (2) également disposé au-dessus du trou d'alimentation du malaxeur, la vanne rotative (1) présentant au moins 4 segments.

9. Malaxeur selon la revendication 8, dans lequel le dispositif d'alimentation supplémentaire (2) est une vanne rotative supplémentaire présentant au moins 4 segments ou un volet.

10. Malaxeur selon la revendication 9, dans lequel le volet est disposé au-dessus de la vanne rotative (1) ou la vanne rotative supplémentaire est disposée au-dessus de la vanne rotative (1).

11. Malaxeur selon l'une quelconque des revendications précédentes 8 ou 10, dans lequel le mécanisme d'alimentation (3) comprend un racloir qui racle la matière sus-jacente du mécanisme d'alimentation (3).

12. Malaxeur selon l'une quelconque des revendications précédentes 8 à 11, dans lequel la vanne rotative (1) et/ou le dispositif de remplissage supplémentaire (2) est en chlorure de polyvinyle, métal et/ou caoutchouc.

13. Malaxeur selon l'une quelconque des revendications précédentes 8 à 12, dans lequel la rotation de la vanne rotative (1) est continue.

14. Malaxeur selon la revendication 9, dans lequel la rotation de la vanne rotative supplémentaire est continue ou le volet a un mouvement discontinu.

15. Malaxeur selon la revendication 9, dans lequel la vitesse de rotation de la vanne rotative (1) est égale ou supérieure à la vitesse de rotation de la vanne rotative supplémentaire.

16. Malaxeur selon l'une quelconque des revendications précédentes 8 à 15, dans lequel une basse pression inférieure à 150 mbars (absolus) est maintenue dans la zone de mélange du malaxeur.

17. Malaxeur selon l'une quelconque des revendications précédentes 8 à 16, dans lequel de la poudre de polymère est introduite dans le malaxeur par l'intermédiaire du mécanisme d'alimentation (3).

18. Malaxeur selon l'une quelconque des revendications précédentes 8 à 17, dans lequel le malaxeur est un malaxeur à double arbre ou un malaxeur à arbre simple.
